# EUROPÄISCHE PATENTANMELDUNG

(11) **EP 0 795 741 A2**
(43) Veröffentlichungstag der Anmeldung: **17.09.1997**
(21) Anmeldenummer: 97103311.3
(22) Anmeldetag: 28.02.1997
(51) Int. Cl.: G01L 1/22, G01G 3/14

(54) **Vorrichtung zur Kraftmessung mit einer elektromechanischen Wägezelle**

(30) Priorität: 14.03.1996 DE 19609921
(71) Anmelder: Tedea Huntleigh Europe Limited, Cardiff CF2 2HB (GB)
(72) Erfinder: Ralf, Scherer, 55118 Mainz (DE); Gassmann, Helmut, Dr., 64342 Seeheim-Jugenheim (DE); von Wolfframsdorff, Joachim Hose, 64342 Seeheim-Jugenheim (DE); McRobbie, William Alexander, Cardiff CF3 8AD (GB)
(74) Vertreter: Katscher, Helmut, Dipl.-Ing.

(57) **Zusammenfassung**

Eine Vorrichtung zur Kraftmessung weist eine elektromechanische Wägezelle (1) auf, die einen ring- oder scheibenförmigen Verformungskörper (2) hat. Ein Kraftaufnahmering (12) stützt sich über einen eine Gleitfläche bildenden ringförmigen Kugelflächenabschnitt (10) schwenkbar an einem Krafteinleitungsring (2) der Wägezelle (1) ab. Der Kugelflächenabschnitt (10) liegt in Höhe des ring- oder scheibenförmigen Verformungskörpers (2) der Wägezelle (1). Auf den Kraftaufnahmering (12) wirkende Seitenkräfte und Winkelbewegungen des Kraftaufnahmerings (12) verursachen kein die Messung der Wägezelle (1) störendes Biegemoment.

## Beschreibung

Die Erfindung betrifft eine Vorrichtung zur Kraftmessung mit einer elektromechanischen Wägezelle, die einen ring- oder scheibenförmigen Verformungskörper aufweist, der mit einem zentralen Krafteinleitungskörper und einem äußeren Krafteinleitungsring verbunden ist.

Derartige Vorrichtungen zur Kraftmessung sind in zahlreichen Ausführungsformen bekannt. Die darin verwendeten Wägezellen, die auch als Kraftmeßdosen bezeichnet werden, weisen üblicherweise einen ring- oder scheibenförmigen Verformungskörper auf, der mit Dehnungsmeßstreifen, beispielsweise in Form von Dehnungsmeßspiralen, bestückt ist, die zu einer Brückenschaltung zusammengeschaltet sind. Die Brückenschaltung liefert ein der gemessenen Kraft entsprechendes Meßsignal.

Wenn bei der Einleitung der zu messenden Kraft zugleich Biegemomente auf die Wägezelle ausgeübt werden, so kann dies zu einer Störung der Messung führen. Um solche Biegemomente zu vermeiden, ist es bekannt, die Krafteinleitung über einen mit balligen Stützflächen versehenen Pendelkörper vorzunehmen. Dies macht aber eine Führung der Krafteinleitungsteile erforderlich, da der Pendelkörper keine seitlichen Führungskräfte aufnehmen kann. Der Einsatzbereich derartiger Kraftmeßeinrichtungen ist daher beschränkt.

Aufgabe der Erfindung ist es daher, eine Vorrichtung der eingangs genannten Gattung so auszubilden, daß über die Wägezelle seitliche Führungskräfte übertragen werden können, daß die Wägezelle dabei aber von störenden Biegemomenten weitgehend frei bleibt.

Diese Aufgabe wird erfindungsgemäß dadurch gelöst, daß sich ein Kraftaufnahmering über einen eine Gleitfläche bildenden ringförmigen Kugelflächenabschnitt schwenkbar am Krafteinleitungsring abstützt und daß der Kugelflächenabschnitt in Höhe des ring- oder scheibenförmigen Verformungskörpers liegt. Vorzugsweise liegt der Kugelmittelpunkt des Kugelflächenabschnitts auf der Mittelachse der Wägezelle.

Die schwenkbare Abstützung des Krafteinleitungsringes am ringförmigen Kugelflächenabschnitt bewirkt, daß die Wägezelle bei der Krafteinleitung von Biegemomenten frei bleibt. Auch der axialen, zu messenden Kraft überlagerte Seitenkräfte können kein Biegemoment auf die Wägezelle ausüben, weil die Einleitung dieser Seitenkrafte in Höhe des ring- oder scheibenförmigen Verformungskörpers erfolgt. Störende Biegemomente werden durch die mögliche Gleitbewegung auf dem Kugelflächenabschnitt von der Wägezelle abgekoppelt.

Diese gleichsam kardanische Lagerung des Kraftaufnahmerings an der Wägezelle ermöglicht die Verwendung der Vorrichtung auch im Fahrzeugbau beispielsweise als wägendes Montageelement zwischen einem Lastkraftwagenchassis und dessen Aufbau. Beispielsweise kann der Aufbau an vier derartigen Montageelementen aufgenommen werden. Deren Wägezellen werden zusammengeschaltet und erzeugen ein dem Auflagegewicht einschließlich der Ladung proportionales elektrisches Meßsignal, das in einer üblichen Auswertevorrichtung weiterverarbeitet wird. Diese Einrichtungen werden beispielsweise bei Müllastwagen verwendet, um eine laufende Dokumentation der jeweils aufgenommenen Müllmenge zu ermöglichen.

Die unvermeidbaren Winkelbewegungen zwischen dem Lastkraftwagenchassis und dem Aufbau, verursacht durch Straßenunebenheiten, Fahrdynamik und den Beladungszuständ, können aufgenommen werden, ohne daß sich hierdurch die Messungen störende Biegemomente für die Wägezelle ergeben. Zusätzliche mechanische Teile zur Führung bzw. zur Entkoppelung vom Biegemoment sind nicht erforderlich. Alle auftretenden Kräfte können über die Wägezelle übertragen werden, weil es sich dabei nur um Axial- und Seitenkräfte handelt, für deren Aufnahme die Wägezelle ausgelegt ist.

Vorzugsweise liegt der Kugelflächenabschnitt in Höhe der Mitte des Verformungskörpers. Dadurch wird in besonderem Maße eine Unempfindlichkeit gegen eingeleitete Seitenkräfte erreicht.

Gemäß einer bevorzugten Ausführungsform der Erfindung ist vorgesehen, daß der zentrale Krafteinleitungskörper mit einer Grundplatte biegesteif verbunden ist. Die Wägezelle bildet zusammen mit der angeschlossenen Grundplatte ein stabiles Montageelement, das insbesondere auch für den Einsatz beim Bau von Lastkraftwagen geeignet ist.

Gemäß einer bevorzugten Ausführungsform ist vorgesehen, daß der Kraftaufnahmering mit einer oberen Kraftaufnahmeplatte zu einem die Wägezelle überdeckenden napfförmigen Deckel verbunden ist. Dadurch wird ein Schutz der Wägezelle gegen mechanische Beschädigungen bei der Montage und im Betrieb erzielt.

Um bei den im Fahrbetrieb auftretenden vertikalen Beschleunigungen ein Abheben des Kraftaufnahmerings von seiner Gleitfläche zu verhindern, ist in Weiterbildung des Erfindungsgedankens vorgesehen, daß der Kraftaufnahmering mit einem den äußeren Krafteinleitungsring untergreifenden Haltering verbunden ist, der an einem unteren ringförmigen, konzentrisch zum oberen Kugelflächenabschnitt angeordneten Kugelflächenabschnitt des äußeren Krafeinleitungsrings gleitbar anliegt. Da die beiden Kugelflächenabschnitte einen gemeinsamen Mittelpunkt haben, kann der Kraftaufnahmering gegenüber der Wägezelle verschwenkt werden, ohne ein wesentliches Biegemoment in die Wägezelle zu leiten. Zugleich wird ein Abheben des Kraftaufnahmerings verhindert. Das eingeleitete Biegemoment hängt nur von der an den Gleitflächen auftretenden Reibung ab. Diese kann aber durch die Verwendung von reibungsverminderndem Material wesentlich herabgesetzt werden.

Nachfolgend wird ein Ausführungsbeispiel der Erfindung näher erläutert, das in der Zeichnung dargestellt ist. Es zeigt:
Fig. 1 in räumlicher Darstellungsweise und teilweise aufgeschnitten eine Vorrichtung zur Kraftmessung mit einer elektromechanischen Wägezelle,
Fig. 2 einen senkrechten Schnitt durch die Vorrichtung nach Fig. 1,
Fig. 3 in einem Schnitt entsprechend der Fig. 2 eine andere Ausführung einer Wägezelle,
Fig. 4 eine abgewandelte Ausführungsform einer Vorrichtung zur Kraftmessung und
Fig. 5 in einem Teilschnitt ähnlich der Fig. 4 eine weitere abgewandelte Ausführungsform.

Die in der Zeichnung dargestellten Vorrichtungen werden beispielsweise als eines von mehreren wägenden Montageelementen eingesetzt, die zwischen dem Chassis und dem Aufbau eines Lastkraftwagens angeordnet sind, um eine laufende Wägung des Aufbaus zu ermöglichen. Ein bevorzugtes Anwendungsgebiet solcher wägenden Montagelemente sind Müllastkraftwagen, bei denen eine laufende Wägung und Dokumentation der aufgenommenen Müllmenge erwünscht ist.

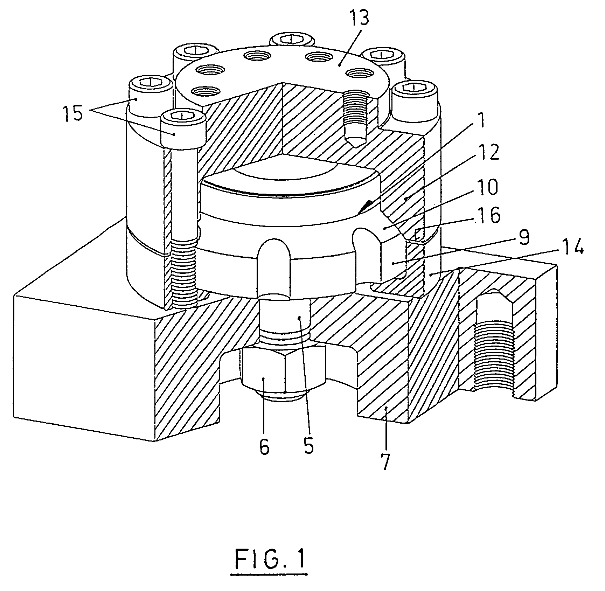

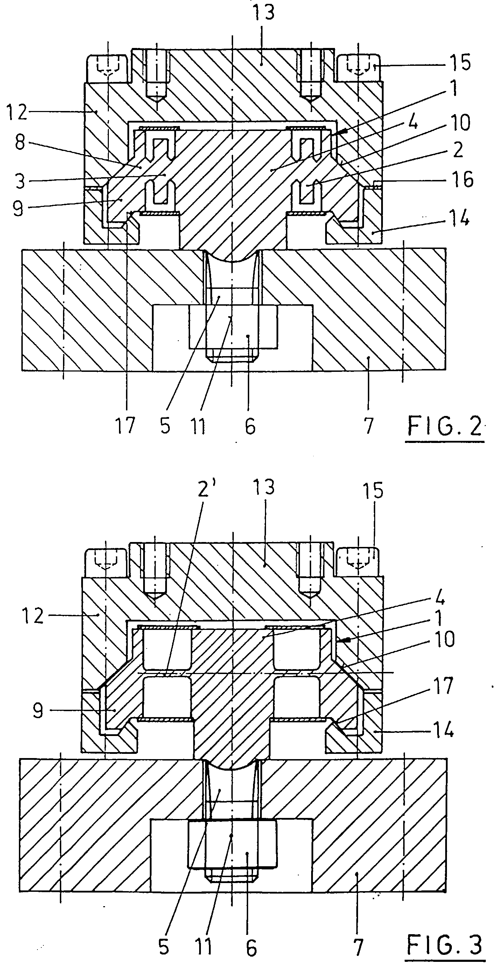

Die in den Fig. 1 und 2 gezeigte Vorrichtung weist eine Wägezelle 1 auf, deren Verformungselement in herkömmlicher Weise ein ringförmiger Verformungskörper 2 ist, der an seiner Oberseite und seiner Unterseite mit Dehnungsmeßstreifen bestückt ist. Die Dehnungsmeßstreifen sind zu einer Brückenschaltung zusammengeschaltet und liefern ein der aufgebrachten Axialkraft entsprechendes Meßsignal an eine (nicht dargestellte) Auswerteschaltung.

Der bei diesein Beispiel ringförmige Verformungskörper 2 ist über einen inneren ringförmigen Gelenksteg 3 mit einem zentralen Krafteinleitungskörper 4 verbunden. Der innere Krafteinleitungskörper 4 ist an seiner Unterseite mit einem Gewindezapfen 5 und einer Mutter 6 an einer Grundplatte 7 biegesteif angeschraubt.

Über einen äußeren ringförmigen Gelenksteg 8 ist der Verformungskörper 2 mit einem äußeren Krafteinleitungsring 9 verbunden. Der Krafteinleitungsring 9 weist an seiner Oberseite in Höhe des ringförmigen Verformungskörpers 2 und in Höhe der Gelenkstege 3 und 8 einen ringförmigen Kugelflächenabschnitt 10 auf, dessen Kugelmittelpunkt 11 auf der Mittelachse der Wägezelle 1 liegt, beim dargestellten Ausführungsbeispiel etwa im Bereich der Mutter 6.

Der ringförmige Kugelflächenabschnitt 10 bildet eine Gleitfläche für einen ebenfalls mit einem Kugelflächenabschnitt darauf ruhenden Kraftaufnahmering 12, der mit einer oberen Kraftaufnahmeplatte 13 zu einem die Wägezelle 1 überdeckenden napfförmigen Deckel verbunden ist.

Der Kugelflächenabschnitt 10, der vorzugsweise mit reibungsverminderndem Material beschichtet ist, bildet eine Gleitfläche, auf der der Kraftaufnahmering 12 auch unter Last eine Schwenkbewegung ausführen kann. Auf diese Weise wird verhindert, daß aus dem Kraftaufnahmering 12 ein die Messung verfälschendes Biegemoment auf die Wägezelle 1 ausgeübt werden kann.

Der Kraftaufnahmering 12 ist an seinem unteren Rand mit einem den äußeren Krafteinleitungsring 9 untergreifenden Haltering 14 verbunden. Der Kraftaufnahmering 12 ist mit dem Haltering 14 durch mehrere achsparallele Schrauben 15 unter Zwischenlage mindestens eines Paßblechs 16 verschraubt.

Der Haltering 14 liegt gleitbar an einem unteren ringförmigen, konzentrisch zu dem oberen Kugelflächenabschnitt 10 angeordneten Kugelflächenabschnitt 17 des äußeren Krafteinleitungsrings 9 an. Der Kugelmittelpunkt dieses unteren Kugelflächenabschnitts 17 fällt mit dem Kugelmittelpunkt 11 des oberen Kugelflächenabschnitts 10 zusammen. Auch dieser untere Kugelflächenabschnitt 17 kann mit reibungsverminderndem Material beschichtet sein. Der Haltering 14 bildet eine Abhebesicherung für den Kraftaufnahmering 12, so daß dieser auch bei vertikalen Beschleunigungen nicht von der Wägezelle 1 abgehoben werden kann. Durch die Wahl des gemeinsamen Kugelmittelpunktes 11 der beiden Kugelflächenabschnitte 10 und 17 bleibt aber die weitestgehend momentenfreie Schwenkbarkeit erhalten.

Das in Fig. 3 im Schnitt dargestellte Ausführungsbeispiel unterscheidet sich von dem Beispiel nach Fig. 1 und 2 dadurch, daß anstelle des ringförmigen Verformungskörpers und der Gelenkstege 3 und 8 ein als Membran ausgeführter scheibenförmiger Verformungskörper 2' verwendet wird, der die Dehnungsmeßstreifen trägt.

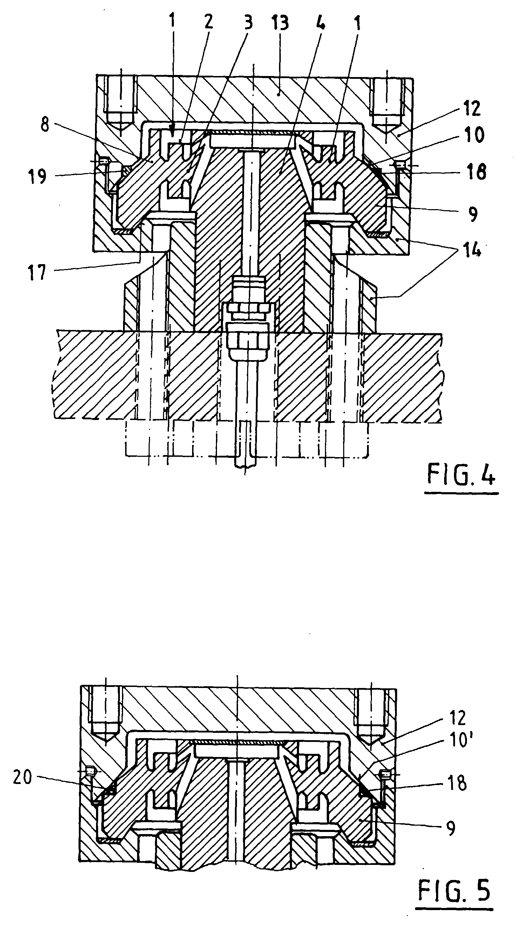

Die in Fig. 4 in einem senkrechten Schnitt gezeigte Vorrichtung zur Kraftmessung unterscheidet sich von den vorher beschriebenen Vorrichtungen, beispielsweise gemäß Fig. 2, im wesentlichen dadurch, daß sich der Kraftaufnahmering 12 über einen Zwischenring 18 an dem ringförmigen Kugelflächenabschnitt 10 abstützt, der am äußeren Krafteinleitungsring 9 ausgebildet ist. Der Zwischenring 18 ist hierbei in eine umlaufende, zur Mittelachse der Wägezelle 1 konzentrische Nut 19 eingelegt und liegt am Kugelflächenabschnitt 10 an. Der Querschnitt des dünnen Zwischenrings 18 ist beispielsweise kreisförmig.

Hiervon unterscheidet sich das in Fig. 5 dargestellte Ausführungsbeispiel nur dadurch, daß der ringförmige Kugelflächenabschnitt 10' am Kraftaufnahmering 12 ausgebildet ist und daß sich der äußere Krafteinleitungsring 9 über den Zwischenring 18 an diesem Kugelflächenabschnitt 10' abstützt. Der Zwischenring 18 ist hierbei in einer Nut 20 des Krafteinleitungsrings 9 aufgenommen.

## Patentansprüche

1. Vorrichtung zur Kraftmessung mit einer elektromechanischen Wägezelle (1) , die einen ring- oder scheibenförmigen Verformungskörper (2,2')aufweist, der mit einem zentralen Krafteinleitungskörper (4) und einem äußeren Krafteinleitungsring (9) verbunden ist, dadurch gekennzeichnet, daß sich ein Kraftaufnahmering (12) über einen eine Gleitfläche bildenden ringförmigen Kugelflächenabschnitt (10,10') schwenkbar am Krafteinleitungsring (9) abstützt und daß der Kugelflächenabschnitt (10,10') in Höhe des ring- oder scheibenförmigen Verformungskörpers (2, 2') liegt.

2. Vorrichtung nach Anspruch 1, dadurch gekennzeichnet, daß der Kugelmittelpunkt (11) des Kugelflächenabschnitts (10,10') auf der Mittelachse der Wägezelle (1) liegt.

3. Vorrichtung nach Anspruch 1, dadurch gekennzeichnet, daß der Kugelflächenabschnitt (10,10') in Höhe der Mitte (3 bzw. 8) des Verformungskörpers (2) liegt.

4. Vorrichtung nach Anspruch 1, dadurch gekennzeichnet, daß der zentrale Krafteinleitungskörper (4) mit einer Grundplatte (7) biegesteif verbunden ist.

5. Vorrichtung nach Anspruch 1, dadurch gekennzeichnet, daß der Kraftaufnahmering (12) mit einer oberen Kraftaufnahmeplatte (13) zu einem die wägezelle (1) überdeckenden napfförmigen Deckel verbunden ist.

6. Vorrichtung nach Anspruch 1, dadurch gekennzeichnet, daß der Kraftaufnahmering (12) mit einein den äußeren Krafteinleitungsring (9) untergreifenden Haltering (14) verbunden ist, der an einem unteren ringförmigen, konzentrisch zum oberen Kugelflächenabschnitt (10,10') angeordneten Kugelflächenabschnitt (17) des äußeren Krafteinleitungsrings (9) gleitbar anliegt.

7. Vorrichtung nach Anspruch 6, dadurch gekennzeichnet, daß der Kraftaufnahmering (12) mit dem Haltering (14) unter Zwischenlage mindestens eines Paßblechs (16) verschraubt ist.

8. Vorrichtung nach Anspruch 1, dadurch gekennzeichnet, daß der obere Kugelflächenabschnitt (10,10') mit reibungsverminderndem Material beschichtet ist.

9. Vorrichtung nach Anspruch 6, dadurch gekennzeichnet, daß der untere Kugelflächenabschnitt (17) mit reibungsverminderndem Material beschichtet ist.

10. Vorrichtung nach Anspruch 1, dadurch gekennzeichnet, daß der ringförmige Kugelflächenabschnitt (10) am äußeren Krafteinleitungsring (9) ausgebildet ist und daß sich der Kraftaufnahmering (12) über einen Zwischenring (18) am Kugelflächenabschnitt (10) abstützt.

11. Vorrichtung nach Anspruch 1, dadurch gekennzeichnet, daß der ringförmige Kugelflächenabschnitt (10') am Kraftaufmahmering (12) ausgebildet ist und daß sich der äußere Krafteinleitungsring (9) über einen Zwischenring (18) am Kugelflächenabschnitt (10') abstützt.
